# EUROPEAN PATENT SPECIFICATION

(11) **EP 3 354 159 B1**
(45) Date of publication and mention of the grant of the patent: **11.12.2019**
(21) Application number: 18153981.8
(22) Date of filing: 29.01.2018
(51) Int. Cl.: A46B 13/00, A46B 13/02, B60S 3/06

(54) **HIGHLY EFFICIENT BRUSH DEVICE**
HOCHEFFIZIENTE BÜRSTENVORRICHTUNG
DISPOSITIF DE BROSSE HAUTEMENT EFFICACE

(30) Priority: 31.01.2017 IT 201700010578
(43) Date of publication of application: 01.08.2018
(73) Proprietor: Morelite S.p.A., 47899 Serravalle (SM)
(72) Inventor: Bernardi Pirini, Fernandino, 46018 Ponteterra (MN) (IT)
(74) Representative: Negrini, Elena

(56) References cited:
- EP-A1- 2 548 774
- US-A1- 2005 268 412
- US-A1- 2008 078 048
- US-A1- 2011 138 558

## Description

The present invention is in the field of brushes for automatic washing systems and for cleaning in general, and relates to a brush device with cleaning elements having high efficiency and cleaning efficacy.

There are known car washing systems provided with brushes supported by vertical and horizontal rollers or cylinders, e.g., made of metal, axially rotated by respective gear motors. These known brushes generally consist of a flat, flexible support which may be fixed to the cylindrical surface of the respective roller and is provided with protruding flexible elements that slide, upon rotation of the roller, along the surface of the car or other vehicle to be washed; a simultaneous sprinkling of water, possibly with a detergent, facilitates the cleaning, thereby also reducing the risk of micro-abrasions on the surface to be washed.

There are known flexible elements consisting of ribbon-shaped bands, made of synthetic foam material, provided with end fringes performing the cleaning and washing function.

Such fringes, which may be rectangular or triangular, are obtained from die cutting or band cutting, where the sheared or cut surfaces, at the edges of the fringes, are perpendicular with the main faces of the respective ribbon-shaped band.

These known flexible elements have the advantage of avoiding any damage to the surfaces to be cleaned; yet, they perform a mild cleaning, which sometimes is inadequate.

Furthermore, when such known fringes freely rotate, they take a well-ordered orientation; yet, as soon as they hit the object to be washed, they can take a non-optimal random orientation and lose their efficacy, e.g., by touching said object with a smaller face or an edge.

There are also known brushes equipped with cleaning bristles that provide a vigorous cleaning action, and yet may damage the surfaces to be cleaned.

One object of the present invention is to provide a highly efficient brush device capable of preventing the surfaces to be cleaned from being scratched or damaged, while giving a vigorous cleaning action.

Another object is to provide a device, wherein the efficacy of the fringes does not depend on their orientation with respect to the object to be washed, and wherein when the fringes hit said object, in any case they tend to take an orientation so as to contact it with the larger main surfaces.

The earlier documents US2005268412A1, EP2548774A1, US2008078048A1 and US2011138558A1 provide an indication of the state of the art and/or disclose a brush device having the features of the preamble of claim 1.

The highly efficient brush device subject-matter of the present invention is provided with a plurality of ribbon-shaped bands, each one provided with two respective main faces, and each one provided with end fringes.

Each end fringe has at least two main surfaces consisting of said main faces, or of extensions thereof, and of at least two lateral surfaces, one on the right and the other one on the left with respect to the longitudinal geometric axis of the end fringe.

In a rest condition of a ribbon-shaped band, in which it is not assembled with the device and lies flat, the main surfaces of each end fringe are flat and mutually parallel; in such rest condition, at least one lateral surface, or the plane or geometric surface approaching such lateral surface, is inclined, at least in some portions of the lateral surface itself, with respect to the main surfaces of the corresponding end fringe, whereby such inclination is different from 90°.

In other words, and still with regard to the above planar condition, the intersections of at least one geometric plane, which is transversal to at least one end fringe and perpendicular with the corresponding main surface, with one of the lateral surfaces and with one of the main surfaces of such at least one end fringe, form an interposed angle which is different from 90°. This technical solution allows to solve, amongst others, the technical problems reported above as objects of the invention.

The features of the invention are highlighted hereinafter, with specific reference to the accompanying drawings, in which:
- Figure 1 shows a plan view of the highly efficient brush device subject-matter of the present invention, arranged on a plane;
- Figure 2 shows a section view along plane II - II of Figure 1;
- Figure 3 shows a plan view of a first variant of the device in Figure 1;
- Figure 4 shows a section view along plane VI - VI of Figure 3;
- Figure 5 shows a plan view of a second variant of the device in Figure 1;
- Figures 6 and 7 show section views along the planes VI - VI and VII - VII, respectively, in Figure 5;
- Figures 8 and 9 show enlarged details of Figures 2, 4 and 7, respectively;
- Figure 10 shows a plan view of a third variant of the device in Figure 1;
- Figure 11 shows a section view along plane XI - XI of Figure 10.

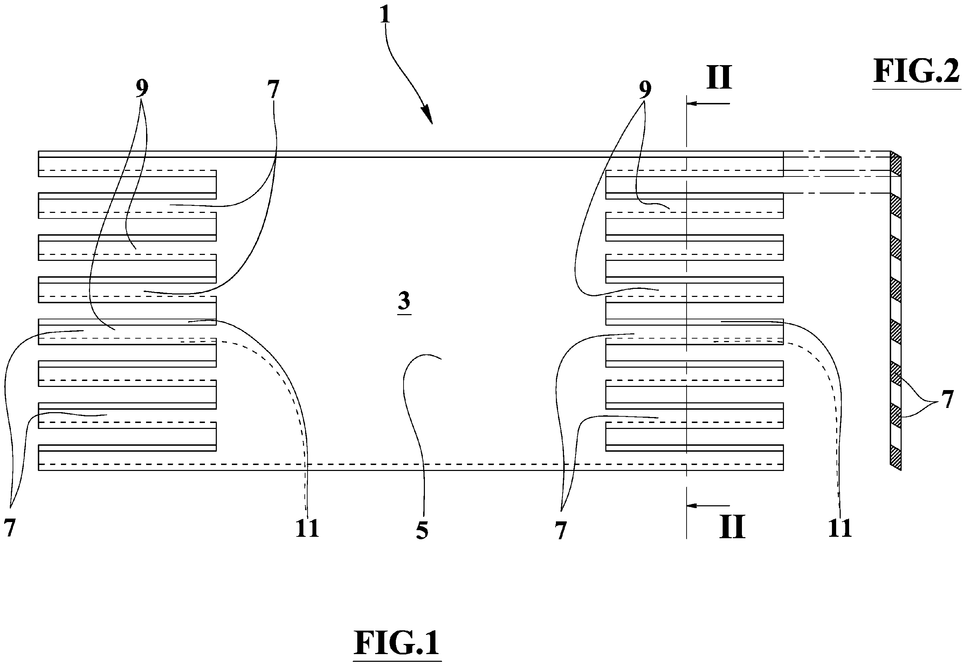

Referring to Figures 1, 2 and 8, numeral 1 indicates the highly efficient brush device subject-matter of the present invention, provided with a plurality of ribbon-shaped bands 3 obtained starting from a sheet or tape of flexible material having low, but not absent, elasticity and low density, such as felt, fabric, unwoven fabric, or the like, preferably a low-density synthetic material, such as closed cell polyethylene foam.

When lying flat, each ribbon-shaped band 3 has a perimeter in the shape of a polygon or of a closed curved line, such as oval or elliptical in shape, or preferably rectangular in shape, with two larger longitudinal sides, and is formed by means of cutting operations of said sheet or tape.

Each ribbon-shaped band 3 is provided with two respective main faces 5, corresponding to the faces of the sheet or tape.

Each ribbon-shaped band 3 is provided with end fringes 7 that extend longitudinally into one or both transversal end portions of the respective ribbon-shaped band 3; in other words, the end fringes 7 are obtained at one or, preferably, both opposed smaller sides of the rectangular ribbon-shaped band 3.

Each end fringe 7 has at least two main surfaces 9 consisting of said main faces 5, or of extensions thereof, and has two lateral surfaces 11; the sum of the areas of said two main surfaces 9 and of its lateral surfaces 11 is equal to or slightly lower than the total surface area of the end fringe 7.

In a rest condition of a ribbon-shaped band 3, in which it is not assembled with the device 1 yet, and lies flat, the intersections I1, I2 of one geometric plane, which is transversal to one end fringe 7, with one of the lateral surfaces 11 and with one of the main surfaces 9 of such end fringe 7 form an interposed angle A which is different from 90°, regardless of the longitudinal position of the section plane or in some portions of such end fringe 7.

In other words, the invention provides that at least one of the two lateral surfaces 11 of the end fringe 7 is inclined with respect to the main surfaces 9, whereas the prior art provides that the two lateral surfaces 11 are perpendicular with the two main surfaces 9.

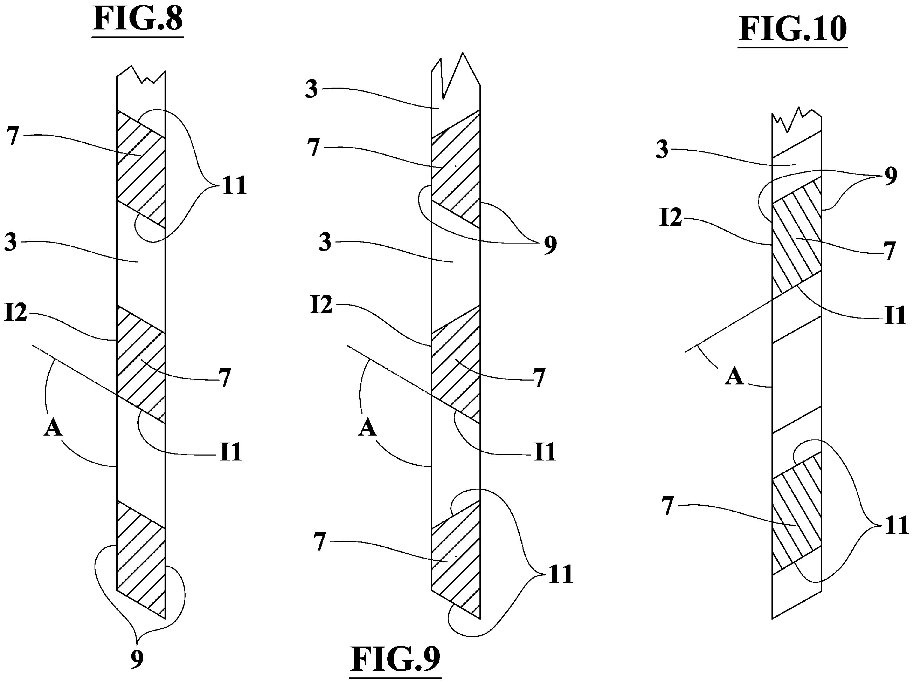

With particular reference to the embodiment shown in Figures 1, 2 and 8, the two lateral surfaces 11 of each end fringe 7 are mutually parallel and inclined by about 45° with respect to the corresponding two main surfaces 9 or with respect to the two main surfaces 5; in this manner, the cross section of each end fringe 7, illustrated in Figure 8, is in the shape of a lozenge or a parallelogram. More generally, the invention provides that one or both lateral surfaces 11 of an end fringe 7 form angles ranging from 15° to 75° with the respective main surfaces 9. For example, the invention also provides that one of the two lateral surfaces is inclined with respect to the main surfaces, and that the other lateral surface is orthogonal to the main surfaces.

The invention further provides that one or both lateral surfaces 11 of a end fringe 7 have a constant or variable, e.g., increasing, inclination with respect to the main surfaces 9, starting from the basis of the end fringe 7 towards the free end thereof 7.

The invention generally provides that the lateral surfaces 11 of an end fringe 7 are flat or have an undulation, which is regular or irregular and/or random.

In the first embodiment shown in Figures 1, 2 and 8, the longitudinal edges of each one of the main surfaces 9, or the corners between the main surfaces and the flat lateral surfaces, of the end fringe 7 are rectilinear and mutually parallel. Alternatively, said edges or corners may be corrugated or curved, depending on the three-dimensional corrugated or curved shape of the lateral surfaces.

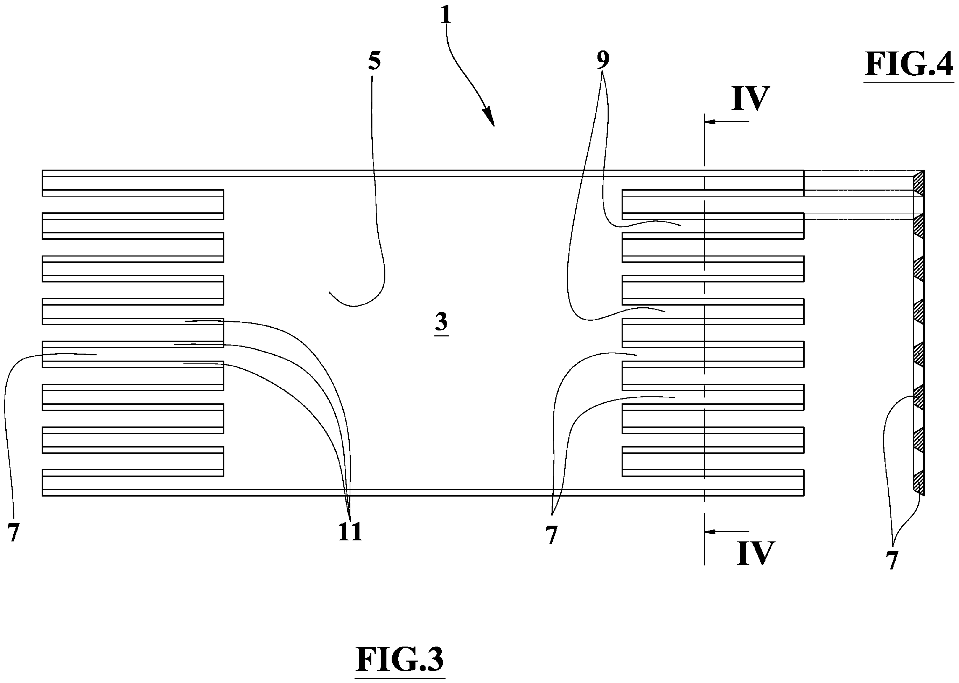

The second embodiment of the invention, shown in Figures 3, 4 and 9, is different from the first embodiment and variants thereof, in that the lateral surfaces 11 of each end fringe 7 are not mutually parallel, but are mutually inclined of an angle ranging from 10° to 160°, preferably of about 60° to 90°, and are inclined of angles different from 90° with respect to the corresponding main surfaces 9. For example, the cross section of each end fringe 7 is in the shape of an isosceles trapezium, as shown in Figure 9.

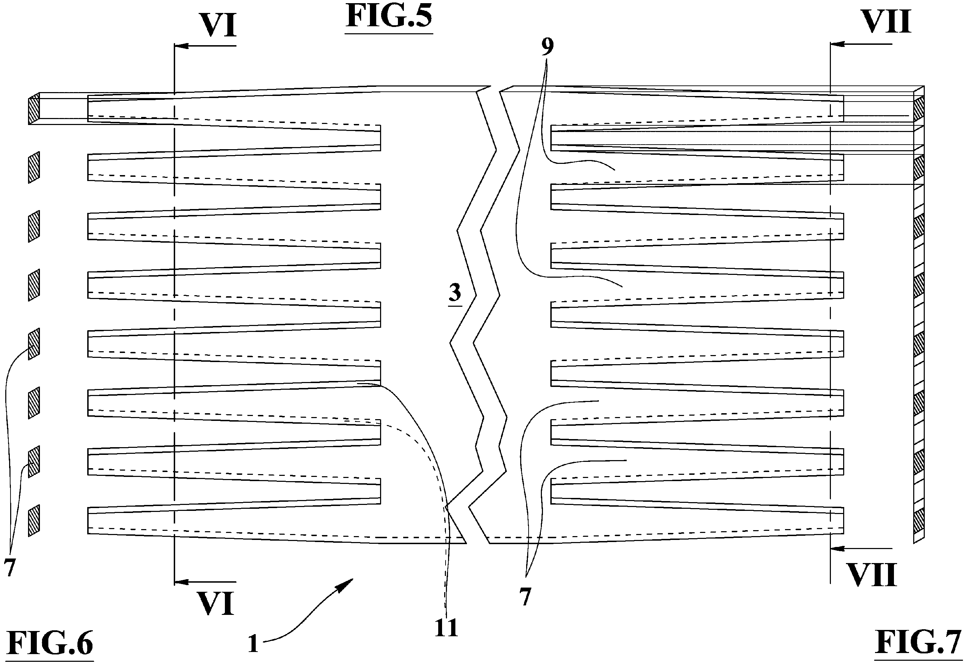

The third embodiment of the invention, shown in Figures 5, 6 and 10, is different from the first embodiment and its variants in that the flat-laying terminal fringes 7 are in the shape of a triangle or of an elongated isosceles trapezium.

In this variant, the lateral faces 11 of each end fringe 7 are not mutually parallel, though they are inclined concordantly with respect to the corresponding main faces 9, and the longitudinal edges of each one of the main surfaces 9 of each end fringe 7 are mutually inclined and converge towards the free end of the end fringe 7.

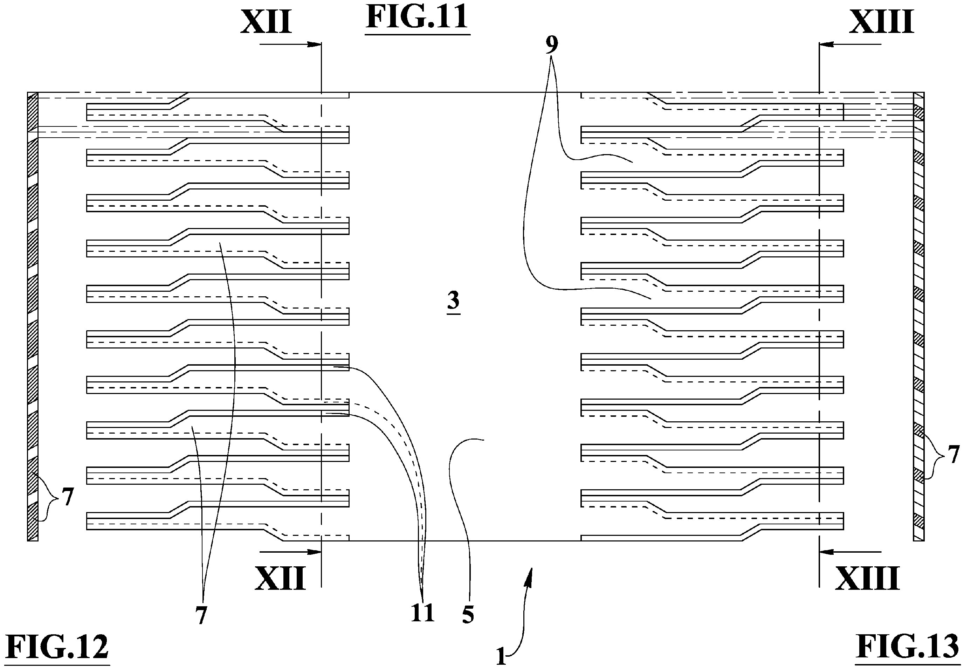

The variant in Figures 11 and 12 differs from the first embodiment and its variants in that each flat-lying end fringe 7 has a stepped shape, i.e., consists of elongated rectangles mutually joint in a staggered way at their smaller sides.

As an alternative to the rectangular, triangular or stepped shape, the invention provides that the plan shape of each flat-laying end fringe 7 may be tapered or ogival, the maximum width being at the basis of the end fringe 7 and the minimum width being at the free ends, i.e., opposite to the basis of the end fringe 7.

It is to note that with other geometrical features and the specific weight being equal, the end fringes of the invention have a total surface that is larger than that of the fringes of the well-known bands, and this partially explains the better cleaning effect ensured by the highly efficient brush device of the invention, provided with ribbon-shaped bands 3 having end fringes with faces inclined by angles different from 90°.

It is very likely that the inclination itself of these faces of the end fringes helps improving the performance as compared to those of the devices implementing well-known bands and fringes.

Furthermore, when the inventive fringes hit the object to be washed, they can take random orientations, but in any case, it is their configuration that makes them effective, regardless of their orientation; moreover, upon hitting said object, they tend to take an orientation so as to contact it with their larger main surfaces.

## Claims

1. Highly efficient brush device provided with a plurality of ribbon-shaped bands (3), each one provided with two respective main faces (5) and each one provided with end fringes (7), each one of these latter (7) has at least two main surfaces (9) which consist of said main faces (5), or of extensions thereof, and of two lateral surfaces (11); said device (1) being **characterized in that**, in a rest condition of a ribbon-shaped band (3), in which it (3) is not assembled with the device (1) and lies flat, the intersections (I1, I2) of at least one geometric plane, which is transversal to at least one end fringe (7), with one of the lateral surfaces (11) and with one of the main surfaces (9) of such at least one end fringe (7), form an interposed angle (A) which is different from 90°.

2. Device according to claim 1 **characterized in that** both lateral surfaces (11) of the at least one end fringe (7) are inclined with respect to the main surfaces (9), where such inclination is constant or variable.

3. Device according to claim 1 or 2 **characterized in that** the lateral surfaces (11) of the at least one end fringe (7) are inclined, concordantly or oppositely to one another (11), with respect to the main surfaces (9).

4. Device according to any of the preceding claims **characterized in that** the longitudinal edges of each one of the main surfaces (9) of the at least one end fringe (7) are mutually parallel or divergent or convergent towards the free end of the at least one end fringe (7).

5. Device according to any of the preceding claims **characterized in that** the longitudinal edges of each one of the main surfaces (9) of the at least one end fringe (7) are rectilinear or curved.

6. Device according to any of the preceding claims, **characterized in that** both lateral surfaces (11) of the at least one end fringe (7) are flat or have an undulation, which is regular or irregular.

7. Device according to any of the preceding claims, **characterized in that** the lateral surfaces (11) of all the end fringes (7) of each ribbon-shaped band (3) are inclined with respect to the corresponding main surfaces (9).

8. Device according to any of the preceding claims, **characterized in that** the end fringes (7) of each ribbon-shaped band (3) are obtained at the opposed ends or lateral portions of such ribbon-shaped band (3).

9. Device according to any of the preceding claims, **characterized in that** the lateral surfaces (11) form angles ranging from 15° to 75°, preferably of about 45°, with the main surfaces (9).

10. Device according to claim 4 or 5, **characterized in that** the plan shape of each flat-laying end fringe (7) is rectangular, triangular, tapered or ogival the maximum width being at the basis of the end fringe (7) and the minimum width being at the free ends, i.e., opposite to the basis, of the end fringe (7), or is made of elongated rectangles mutually joined in a staggered way at their smaller sides.

## Patentansprüche

1. Hocheffiziente Bürstenvorrichtung mit einer Mehrzahl von bandförmigen Streifen (3), die jeweils mit zwei Hauptflächen (5) und jeweils mit Endfransen (7) ausgestattet sind, wobei jede dieser Endfransen (7) mindestens zwei Hauptoberflächen (9) aufweist, die aus den Hauptflächen (5) oder deren Verlängerungen sowie aus zwei seitlichen Oberflächen (11) bestehen; und die Vorrichtung (1) ist **dadurch gekennzeichnet, dass** in einem Ruhezustand eines bandförmigen Streifens (3), in dem der Streifen (3) nicht an der Vorrichtung (1) montiert ist und flach liegt, die Schnittpunkte (I1, I2) mindestens einer geometrischen Ebene, die quer zu mindestens einer Endfranse (7) verläuft, mit einer der seitlichen Oberflächen (11) und mit einer der Hauptoberflächen (9) dieser mindestens einen Endfranse (7) einen Zwischenwinkel (A) bilden, der sich von 90° unterscheidet.

2. Vorrichtung gemäß Anspruch 1, **dadurch gekennzeichnet, dass** beide seitlichen Oberflächen (11) der mindestens einen Endfranse (7) in Bezug auf die Hauptoberflächen (9) geneigt sind, wobei diese Neigung konstant oder variabel ist.

3. Vorrichtung gemäß Anspruch 1 oder 2, **dadurch gekennzeichnet, dass** die seitlichen Oberflächen (11) der mindestens einen Endfranse (7) in Bezug auf die Hauptoberflächen (9) übereinstimmend oder entgegengesetzt zueinander (11) geneigt angeordnet sind.

4. Vorrichtung gemäß einem der vorhergehenden Ansprüche, **dadurch gekennzeichnet, dass** die Längskanten jeder der Hauptoberflächen (9) der mindestens einen Endfranse (7) zueinander parallel oder divergierend oder konvergierend in Richtung des freien Endes der mindestens einen Endfranse (7) angeordnet sind.

5. Vorrichtung gemäß einem der vorhergehenden Ansprüche, **dadurch gekennzeichnet, dass** die Längskanten jeder der Hauptoberflächen (9) der mindestens einen Endfranse (7) geradlinig oder gebogen sind.

6. Vorrichtung gemäß einem der vorhergehenden Ansprüche, **dadurch gekennzeichnet, dass** beide seitliche Oberflächen (11) der mindestens einen Endfranse (7) flach sind oder eine Wellenform aufweisen, die regelmäßig oder unregelmäßig ist.

7. Vorrichtung gemäß einem der vorhergehenden Ansprüche, **dadurch gekennzeichnet, dass** die seitlichen Oberflächen (11) aller Endfransen (7) jedes bandförmigen Streifens (3) in Bezug auf die entsprechenden Hauptoberflächen (9) geneigt sind.

8. Vorrichtung gemäß einem der vorhergehenden Ansprüche, **dadurch gekennzeichnet, dass** die Endfransen (7) jedes bandförmigen Streifens (3) an den gegenüberliegenden Enden oder seitlichen Bereichen dieses bandförmigen Streifens (3) erhalten werden.

9. Vorrichtung gemäß einem der vorhergehenden Ansprüche, **dadurch gekennzeichnet, dass** die seitlichen Oberflächen (11) mit den Hauptoberflächen (9) Winkel im Bereich von 15° bis 75°, vorzugsweise von etwa 45°, bilden.

10. Vorrichtung gemäß Anspruch 4 oder 5, **dadurch gekennzeichnet, dass** die ebene Form jeder flachliegenden Endfranse (7) rechteckig, dreieckig, verjüngt oder ogival ist, wobei die maximale Breite an der Basis der Endfranse (7) und die minimale Breite an den freien Enden, d.h. entgegengesetzt zur Basis, der Endfranse (7) vorhanden ist, oder aus länglichen Rechtecken besteht, die an ihren kleineren Seiten versetzt miteinander verbunden sind.

## Revendications

1. Dispositif de brosse hautement efficace comportant une pluralité de bandes en forme de ruban (3), chacune comportant deux faces principales respectives (5) et chacune comportant des franges d'extrémité (7), chacune de ces dernières (7) ayant au moins deux surfaces principales (9) qui sont constituées par lesdites faces principales (5), ou des extensions de celles-ci, et par deux surfaces latérales (11) ; ledit dispositif (1) étant **caractérisé par le fait que**, dans un état au repos d'une bande en forme de ruban (3), dans lequel elle (3) n'est pas assemblée au dispositif (1) et s'étend à plat, les intersections (I1, I2) d'au moins un plan géométrique, qui est transversal à au moins une frange d'extrémité (7), avec l'une des surfaces latérales (11) et avec l'une des surfaces principales (9) de ladite au moins une frange d'extrémité (7), forment un angle interposé (A) qui est différent de 90°.

2. Dispositif selon la revendication 1, **caractérisé par le fait que** les deux surfaces latérales (11) de l'au moins une frange d'extrémité (7) sont inclinées par rapport aux surfaces principales (9), une telle inclinaison étant constante ou variable.

3. Dispositif selon la revendication 1 ou 2, **caractérisé par le fait que** les surfaces latérales (11) de l'au moins une frange d'extrémité (7) sont inclinées, de manière concordante ou opposée l'une à l'autre (11), par rapport aux surfaces principales (9).

4. Dispositif selon l'une quelconque des revendications précédentes, **caractérisé par le fait que** les bords longitudinaux de chacune des surfaces principales (9) de l'au moins une frange d'extrémité (7) sont mutuellement parallèles ou divergents ou convergents vers l'extrémité libre de l'au moins une frange extrémité (7).

5. Dispositif selon l'une quelconque des revendications précédentes, **caractérisé par le fait que** les bords longitudinaux de chacune des surfaces principales (9) de l'au moins une frange d'extrémité (7) sont rectilignes ou incurvés.

6. Dispositif selon l'une quelconque des revendications précédentes, **caractérisé par le fait que** les deux surfaces latérales (11) de l'au moins une frange d'extrémité (7) sont plates ou ont une ondulation, qui est régulière ou irrégulière.

7. Dispositif selon l'une quelconque des revendications précédentes, **caractérisé par le fait que** les surfaces latérales (11) de toutes les franges d'extrémité (7) de chaque bande en forme de ruban (3) sont inclinées par rapport aux surfaces principales correspondantes (9).

8. Dispositif selon l'une quelconque des revendications précédentes, **caractérisé par le fait que** les franges d'extrémité (7) de chaque bande en forme de ruban (3) sont obtenues aux extrémités opposées ou aux parties latérales de ladite bande en forme de ruban (3).

9. Dispositif selon l'une quelconque des revendications précédentes, **caractérisé par le fait que** les surfaces latérales (11) forment des angles allant de 15° à 75°, de préférence d'environ 45°, avec les surfaces principales (9).

10. Dispositif selon la revendication 4 ou 5, **caractérisé par le fait que** la forme de plan de chaque frange d'extrémité s'étendant à plat (7) est rectangulaire, triangulaire, effilée ou ogivale, la largeur maximale étant au niveau de la base de la frange d'extrémité (7) et la largeur minimale étant au niveau des extrémités libres, c'est-à-dire opposées à la base, de la frange d'extrémité (7), ou est faite de rectangles allongés mutuellement reliés de manière échelonnée au niveau de leurs côtés plus petits.
